(19) Europäisches Patentamt
European Patent Office
Office européen des brevets

(11) **EP 2 941 333 B1**

(12) **FASCICULE DE BREVET EUROPEEN**

(45) Date de publication et mention
de la délivrance du brevet:
**12.04.2017 Bulletin 2017/15**

(21) Numéro de dépôt: **13802960.8**

(22) Date de dépôt: **10.12.2013**

(51) Int Cl.:
***B25J 9/16*** *(2006.01)*

(86) Numéro de dépôt international:
**PCT/EP2013/076004**

(87) Numéro de publication internationale:
**WO 2014/106564 (10.07.2014 Gazette 2014/28)**

(54) **PROCEDE D'ESTIMATION DE MOUVEMENT D'UN OBJET MASSIQUE POLY-ARTICULE**

VERFAHREN ZUR BEWEGUNGSSCHÄTZUNG EINES MEHRGELENKIGEN MASSEOBJEKTS

METHOD FOR ESTIMATING MOVEMENT OF A POLY-ARTICULATED MASS OBJECT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.01.2013 FR 1350012**

(43) Date de publication de la demande:
**11.11.2015 Bulletin 2015/46**

(73) Titulaires:
• **Movea
38000 Grenoble (FR)**
• **Commissariat à l'Énergie Atomique
et aux Énergies Alternatives
75015 Paris (FR)**

(72) Inventeurs:
• **MORINIERE, Boris
F-38000 Grenoble (FR)**
• **ANDRIOT, Claude
F-75004 Paris (FR)**

(74) Mandataire: **Brunelli, Gérald
Marks & Clerk France
Immeuble Visium
22, avenue Aristide Briand
94117 Arcueil Cedex (FR)**

(56) Documents cités:
**US-A1- 2008 285 805**

**Description**

L'invention concerne un procédé d'estimation de mouvement d'un objet massique poly-articulé et s'applique au domaine de la capture du mouvement d'un objet poly-articulé à l'aide de capteurs inertiels disposés sur l'objet.

Plusieurs techniques existantes peuvent être utilisées pour capturer le mouvement d'un objet poly-articulé. Les systèmes mettant en oeuvre ces techniques peuvent être classés en deux catégories.

La première catégorie regroupe les systèmes exploitant au moins un capteur et ont recours à un dispositif externe qui sert de référence absolue. A titre d'illustration, le dispositif externe peut être composé d'une ou plusieurs caméras situées à des positions connues. Dans un autre exemple, ce dispositif externe peut être composé d'un ou plusieurs émetteurs de type ultrason, électromagnétique ou autre, lesdits émetteurs étant positionnés à des positions connues de l'environnement.

La seconde catégorie regroupe les systèmes composés exclusivement de capteurs n'ayant pas recours à un dispositif externe servant de référence absolue. Avantageusement, les systèmes appartenant à la seconde catégorie bénéficient d'un espace d'utilisation illimité car l'objet poly-articulé n'est pas contraint de rester dans l'espace opérationnel des dispositifs externes utilisés comme référence absolue, cet espace opérationnel correspondant par exemple au champ de vision d'une caméra ou à la portée d'un émetteur. Cependant, les systèmes de cette catégorie présentent un phénomène de dérive d'estimation du fait qu'ils sont dénués de référence par rapport à l'environnement. En d'autres termes, l'erreur des estimations des positions par rapport l'environnement des éléments composant l'objet poly-articulé est non bornée dans le temps. Les éléments composants l'objet poly-articulé sont appelés segments.

Certains systèmes appartenant à la seconde catégorie, c'est-à-dire comportant que des capteurs n'ayant pas recours à un dispositif externe servant de référence absolue utilisent des capteurs inertio-magnétiques comme par exemple des gyromètres, des accéléromètres ou des magnétomètres. Ces capteurs peuvent être mis en oeuvre en utilisant la technologie des microsystèmes électromécaniques MEMS, acronyme venant de l'expression anglo-saxonne « Micro-Electro-Mechanical Systems ». Cela permet d'obtenir des capteurs compacts et légers. Ainsi, il est possible d'instrumenter l'objet poly-articulé avec ce type de capteurs sans qu'ils ne gênent son mouvement. Comme les capteurs MEMS sont peu consommateurs d'énergie, ils sont souvent embarqués à bord de petits modules indépendants et autonomes en énergie qui transmettent leurs informations à une unité centrale via une liaison sans fil. Par ailleurs, les capteurs MEMS sont particulièrement bon marché.

Dans la suite de la description, le mot « accéléromètre » désigne un capteur capable de mesurer la somme vectorielle de son accélération propre et de la gravité. Le mot « gyromètre » désigne un capteur capable de mesurer le vecteur vitesse de rotation par rapport à un repère immobile. Le mot « magnétomètre » désigne un capteur capable de mesurer le vecteur champ magnétique terrestre. Les mesures sont exprimées dans le repère du capteur.

L'estimation de la position en translation d'un objet mobile libre dans l'espace via des mesures issues de capteurs inertio-magnétiques MEMS est un problème difficile à résoudre. La seule information relevant de la translation est la mesure issue de l'accéléromètre. Pour obtenir une position en translation, on peut intégrer deux fois l'accélération propre en fonction du temps. Comme un accéléromètre mesure à la fois l'accélération propre de l'objet auquel il est attaché mais aussi l'accélération liée au champ de pesanteur ambiant, il est nécessaire d'extraire la gravité de la mesure de l'accéléromètre avant de réaliser la double intégration temporelle. La capacité à annuler les effets de la gravité dépend de la capacité du système à estimer finement son orientation, et ce pour toutes les dynamiques du mouvement.

Une erreur même très petite d'un milli-radian (mrad) dans l'estimation de l'orientation induit une erreur de 0.01 $m/s^2$ sur l'accélération propre extraite. Si cette erreur n'est pas corrigée, elle se traduit après la double intégration par une erreur de 4.5 mètres au bout de trente secondes. Les erreurs d'estimation d'orientation des dispositifs sont généralement significativement supérieures à un milli-radian, d'autant plus que la performance des méthodes est très généralement dépendante de la dynamique du mouvement capturé. Ainsi, si cette dérive d'estimation n'est par réduite, une estimation précise de la translation d'un objet mobile libre est impossible.

Un système d'estimation de mouvement permettant de réduire cette dérive est décrit dans le brevet US8165844. La solution proposée s'appuie sur un dispositif composé d'un ensemble de modules de capture disposés sur des segments de l'objet poly-articulé. Chaque module est équipé de capteurs inertio-magnétiques (accéléromètre, gyromètre et éventuellement magnétomètre). Le dispositif comprend en outre un circuit de fusion permettant d'estimer la position et l'orientation des segments. La fusion s'appuie sur les mesures inertio-magnétiques provenant des modules de capture. La collecte des mesures peut se faire de façon filaire ou sans-fil.

Le procédé permettant de réduire la dérive sur l'estimation de la position comprend une phase d'estimation et une phase de correction.

La phase d'estimation comprend deux étapes. Dans une première étape, des grandeurs cinématiques sont estimées pour chaque module de capture à partir des mesures qu'ils fournissent. L'expression « grandeurs cinématiques » désigne la position, la vitesse et l'accélération d'un corps rigide. Ces grandeurs sont exprimées par rapport au module de capture et non par rapport au segment auquel le capteur est attaché. Dans une seconde étape, les grandeurs cinématiques des segments sont estimées en s'appuyant sur la connaissance du positionnement des capteurs sur les segments et de la morphologie de l'objet poly-articulé en utilisant par exemple la longueur des segments. La sortie de la phase d'estimation est une estimation des grandeurs cinématiques des segments.

La phase de correction améliore cette première estimation. Elle peut contenir jusqu'à trois étapes. Dans une première étape, les limitations liées aux articulations sont exploitées pour corriger l'estimation des grandeurs cinématiques des segments. A titre d'exemple une information indiquant une rotation interdite autour d'un axe particulier peut être exploitée. Dans une deuxième étape, la détection de contacts extérieurs est utilisée pour corriger l'estimation des grandeurs cinématiques des segments. Cette détection est réalisée en utilisant un capteur externe ou une heuristique basée sur les grandeurs cinématiques des segments exprimées en des points particuliers. Dans une troisième étape, les mesures de capteurs externes sont exploitées afin de corriger l'estimation des grandeurs cinématiques des segments. Les capteurs externes sont par exemple de type GPS (Global Positionning System) ou RFID (Radio Frequency IDentification). Les données présentées en sortie des trois étapes de la phase de correction sont identiques. Il s'agit d'une estimation des grandeurs cinématiques des segments. La phase correction de ce procédé correspond donc à une suite de corrections élémentaires successives.

Une dérive en translation inhérente à ce procédé est la conséquence de l'utilisation d'une double intégration temporelle des estimées de l'accélération propre pour chaque capteur. Si ces estimées sont très légèrement erronées, les estimées des positions en translation des capteurs sont éloignées de leurs valeurs réelles. La phase de correction est mise en oeuvre pour corriger ces erreurs.

L'invention décrite dans la suite est une alternative à ce procédé permettant de réduire la dérive sur l'estimation de la position en translation en évitant d'avoir recours à une double intégration temporelle de l'estimée de l'accélération propre au niveau de chaque capteur.

Un des buts de l'invention est remédier à des inconvénients de l'état de la technique et d'y apporter des améliorations.

A cet effet l'invention a pour objet un procédé d'estimation de mouvement d'un objet massique poly-articulé, composé d'une pluralité de segments reliés par au moins une articulation. Le procédé comporte les étapes suivantes : acquisition de mesures inertielles issues d'au moins un module de capture fixe par rapport à un segment, ledit module étant composé d'un accéléromètre et d'un gyromètre, lesdites mesures étant exprimées dans un repère de mesure fixe par rapport audit segment ; détermination à partir desdites mesures d'au moins un vecteur effort extérieur à l'objet massique de manière à contrôler un modèle physique de cet objet, ledit modèle représentant l'objet massique ; estimation des grandeurs cinématiques associées aux segments de l'objet en appliquant le principe fondamental de la dynamique avec ledit au moins un vecteur d'effort déterminé à l'étape précédente.

Les étapes du procédé sont par exemple appliquées périodiquement avec un pas de temps prédéfini.

Une étape est par exemple appliquée pour au moins une articulation de l'objet de manière à déterminer un effort et/ou une contrainte associé à ladite articulation à partir des paramètres représentatifs des liaisons mises en oeuvre par cette articulation, cet effort et/ou cette contrainte étant utilisée lors de l'application du principe fondamental de la dynamique.

Des mesures du champs magnétique terrestres peuvent être acquises du module de capture, ledit module comprenant pour cela un troisième capteur de type magnétomètre.

Une étape d'estimation de l'orientation $R_{sensor}$ des modules de capture par rapport à une référence de l'environnement est par exemple appliquée pour ledit au moins un module de capture en utilisant les mesures acquises.

Une étape de détermination d'un moment $\overrightarrow{M_{position}}$ est par exemple appliquée en utilisant le positionnement $R_{sensor}^{sgmt}$ dudit au moins un module de capture sur son segment, de l'orientation $R_{sensor}$ du module de capture et de l'orientation $R_{sgmt}$ du segment auquel il est attaché estimée au pas de temps précédent.

Le moment $\overrightarrow{M_{position}}$ peut être déterminé en utilisant l'expression suivante :

$$\widehat{M_{position}} = K_r \left[ \left( R_{sensor}^{sgmt} R_{sgmt} - R_{sensor} \right) - \left( R_{sensor}^{sgmt} R_{sgmt} - R_{sensor} \right)^T \right]$$

dans laquelle :

$K_r$ est une matrice diagonale de taille 3 x 3 correspondant à des coefficients de raideur ;
$X^T$ représente la transposée d'une matrice X ;
^ représente l'opérateur chapeau tel que :

$$\text{pour tout } v = \begin{bmatrix} v_x \\ v_y \\ v_z \end{bmatrix}, \hat{v} = \begin{bmatrix} 0 & -v_z & v_y \\ v_z & 0 & -v_x \\ -v_y & v_x & 0 \end{bmatrix}$$

Une étape de détermination d'un moment $\overrightarrow{M_{vitesse}}$ représentatif d'un contrôle en vitesse sur un segment est par exemple appliquée après l'acquisition des mesures, ledit moment étant déterminé à partir du positionnement $R_{sensor}^{sgmt}$, de la vitesse de rotation du module de capture $\overrightarrow{\omega_{sensor}}$ et de la vitesse de rotation du segment auquel il est attaché $\overrightarrow{\omega_{sgmt}}$ estimée au pas de temps précédent.

Le moment $\overrightarrow{M_{vitesse}}$ est par exemple déterminé en utilisant l'expression suivante :

$$\widehat{M_{vitesse}} = B_r \left( \overrightarrow{\omega_{sgmt}} - R_{sensor}^{sgmt} \overrightarrow{\omega_{sensor}} \right)$$

dans laquelle :

$B_r$ est une matrice diagonale de taille 3 x 3 correspondant à des coefficients d'amortissement.

Une étape détermine par exemple une force $\overrightarrow{F_{acc}}$ représentative d'un contrôle en accélération incluant la gravité sur le segment en utilisant les masses m des segments sur lesquels sont attachés les modules de capture, des mesures produites par l'accéléromètre et de l'estimation de l'orientation $R_{sensor}$ dudit module.

La force $\overrightarrow{F_{acc}}$ est par exemple déterminée pour chaque segment en utilisant l'expression suivante :

$$\overrightarrow{F_{acc}} = m \, R_{sensor} \, R_{sensor}^{T} (\vec{g} + \overrightarrow{a_{sensor}})$$

dans laquelle :

$\vec{g}$ représente le vecteur gravité ;
$\overrightarrow{a_{sensor}}$ représente l'accélération propre du module de capture.

Une étape détermine par exemple une force $\overrightarrow{F_{sim}}$ simulant l'effet de la pesanteur sur le segment en utilisant les masses m des segments et la position des segments $\overrightarrow{p_{sgmt}}$, $R_{sgmt}$ estimée au pas de temps précédent.

Une étape a par exemple pour objectif de déterminer des forces de collision $\overrightarrow{F_{collision}}$, lesdites forces étant déterminées à partir des informations de contact issues d'une détection de collision entre les géométries des segments et la géométrie de l'environnement et à partir de la modélisation du frottement entre l'objet poly-articulé et l'environnement.

L'invention a aussi pour objet un système d'estimation de mouvement d'un objet massique poly-articulé, composé d'une pluralité de segments reliés par au moins une articulation et comportant :

- un ensemble d'au moins un module de capture positionné sur au moins un segment de l'objet poly-articulé, ledit module étant fixe par rapport à un segment et étant composé d'au moins un accéléromètre et un gyromètre ;
- une unité de traitement adapté pour acquérir des mesures inertielles issues du au moins un module de capture lesdites mesures étant exprimées dans un repère de mesure fixe par rapport audit segment, déterminer à partir desdites mesures au moins un vecteur effort extérieur à l'objet massique de manière à contrôler un modèle physique de cet objet, ledit modèle représentant l'objet massique, estimer des grandeurs cinématiques associées aux segments de l'objet en appliquant le principe fondamental de la dynamique avec le au moins un vecteur d'effort.

L'invention a aussi pour objet un programme d'ordinateur comportant des instructions pour l'exécution du procédé décrit précédemment, lorsque le programme est exécuté par un processeur.

D'autres caractéristiques et avantages de l'invention apparaîtront à l'aide de la description qui suit donnée à titre illustratif et non limitatif, faite en regard des dessins annexés parmi lesquels :

- la figure 1 illustre les relations qui existent entre les différentes grandeurs dynamiques ;
- la figure 2 donne un exemple d'objet poly-articulé utilisé comme modèle physique du corps humain ;

- la figure 3 donne un exemple d'articulation du coude et illustre son influence sur les mouvements relatifs des segments y étant reliés ;
- la figure 4 présente un mode de réalisation d'un procédé d'estimation de mouvement d'un objet poly-massique ;
- la figure 5 donne un exemple de segment du modèle physique en contact avec le sol et fait apparaitre les forces résultant de ce contact ;
- la figure 6 donne un exemple de système d'estimation de mouvement. Dans cet exemple, le mouvement d'un opérateur est capturé de manière à animer son avatar virtuel sur une visualisation 3D en temps réel.

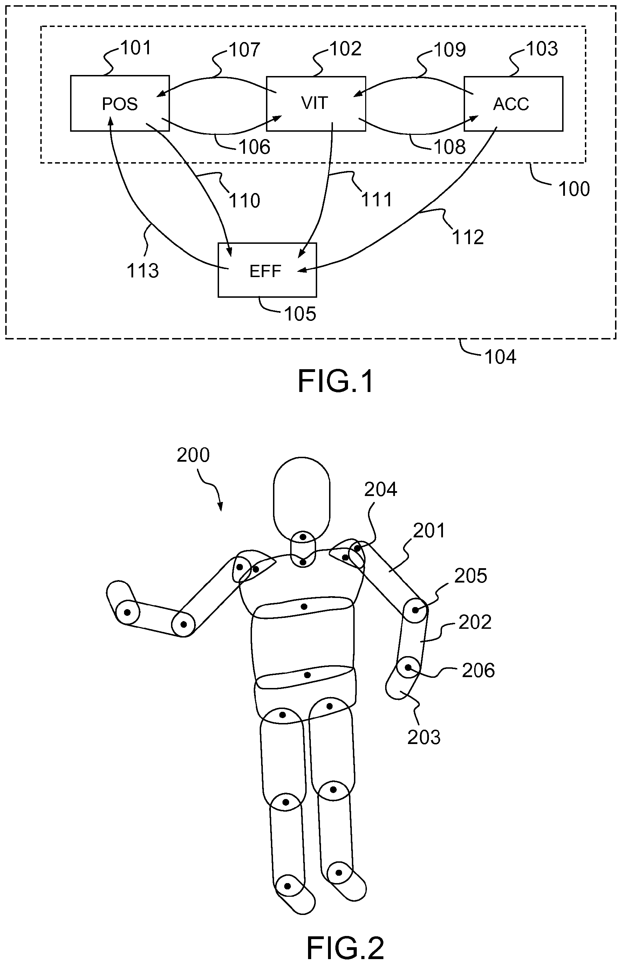

La figure 1 illustre les relations qui existent entre les différentes grandeurs dynamiques.

Les grandeurs cinématiques 100 regroupent la position 101, la vitesse 102 et l'accélération 103 d'un corps rigide. Ces grandeurs peuvent se référer aussi bien à la translation qu'à la rotation.

Ainsi, les grandeurs cinématiques regroupent :

- la position en translation ;
- la position en rotation appelée aussi orientation ou position angulaire ;
- la vitesse de translation appelée aussi vitesse linéaire ;
- la vitesse de rotation appelée aussi taux de rotation ou vitesse angulaire ;
- l'accélération en translation appelée aussi accélération linéaire ou accélération propre ;
- l'accélération en rotation appelée aussi accélération angulaire.

Les grandeurs dynamiques 104 correspondent à l'ensemble composé des grandeurs cinématiques 100 et des efforts 105. Les efforts peuvent se référer aussi bien à la translation qu'à la rotation. Le terme « effort » regroupe :

- les forces, désignées aussi par l'expression « efforts de translation » ;
- les moments, désignés aussi par l'expression « efforts de rotation ».

La vitesse est la dérivée temporelle 106 de la position. Si une estimée de la vitesse est à disposition, il est donc possible d'estimer la position en procédant à une intégration temporelle 107 de la vitesse.

L'accélération est la dérivée temporelle 108 de la vitesse. Si une estimée de l'accélération est à disposition, il est donc possible d'estimer la vitesse en procédant à une intégration temporelle 109 de l'accélération.

Une différence de position peut être convertie en effort par l'introduction d'une raideur 110.

Une différence de vitesse peut être convertie en effort par l'introduction d'un amortissement 111.

La somme des efforts et de l'accélération sont liées par la seconde loi de Newton 112, via l'introduction de la masse et de la matrice d'inertie.

Enfin, il est possible d'obtenir la position à partir de la somme des efforts en intégrant l'équation du Principe Fondamental de la Dynamique 113.

La figure 2 donne un exemple d'objet poly-articulé utilisé comme modèle physique du corps humain.

L'objet d'intérêt est un objet poly-articulé composé de segments reliés par des articulations. Dans la suite de la description, un segment désigne un objet rigide ou supposé rigide définit par :

- une géométrie, c'est-à-dire par une forme volumique bien définie ;
- une masse et une inertie, une matrice d'inertie étant définie dans un repère de référence propre au segment.

Par ailleurs, une articulation désigne une liaison entre deux segments. Cette liaison définit la configuration relative que peut avoir un segment distant par rapport à un segment auquel il est lié. Une articulation est définie par :

- un ou plusieurs degrés de libertés représentatifs notamment des caractéristiques de centres, d'axes ou de buttées ;
- une ou plusieurs contraintes induisant des absences de degré de liberté représentatifs notamment des caractéristiques de centres ou d'axes.

Dans l'exemple de la figure 2, un objet poly-articulé 200 correspondant à une modélisation simple du corps humain est présenté. Cet objet poly-articulé est composé de dix-neuf segments reliés par dix-huit articulations. Ainsi, la main est modélisée par un premier segment 203 relié par une articulation 206 à un deuxième segment 202 correspondant à l'avant bras. L'articulation 206 possède par exemple deux degrés de liberté. Le segment 202 correspondant à l'avant bras est relié par une articulation 205 à deux degrés de liberté au segment 201 correspondant au bras. Le segment 201 est quant à lui relié à la clavicule par une articulation 204 à trois degrés de libertés.

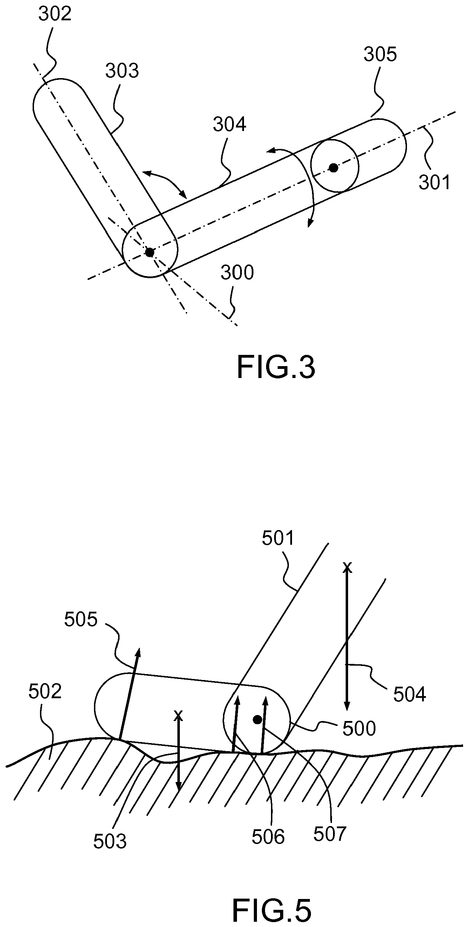

La figure 3 donne un exemple d'articulation du coude et son influence sur les mouvements relatifs des segments y étant reliés. Le bras 303, l'avant bras 304 et la main 305 sont représentés.

L'articulation du coude définit les mouvements de l'avant bras par rapport au bras. Cette articulation autorise deux degrés de libertés permettant deux rotations d'axes concourants correspondant à la flexion/extension 300 et la prono-supination 301.

Les contraintes imposées par l'articulation du coude sont :

- l'interdiction de translation selon les trois axes ;
- l'interdiction de la troisième rotation correspondant à l'axe du bras 302 ;
- les buttées des deux degrés de liberté correspondant aux angles minimum et maximum autorisés.

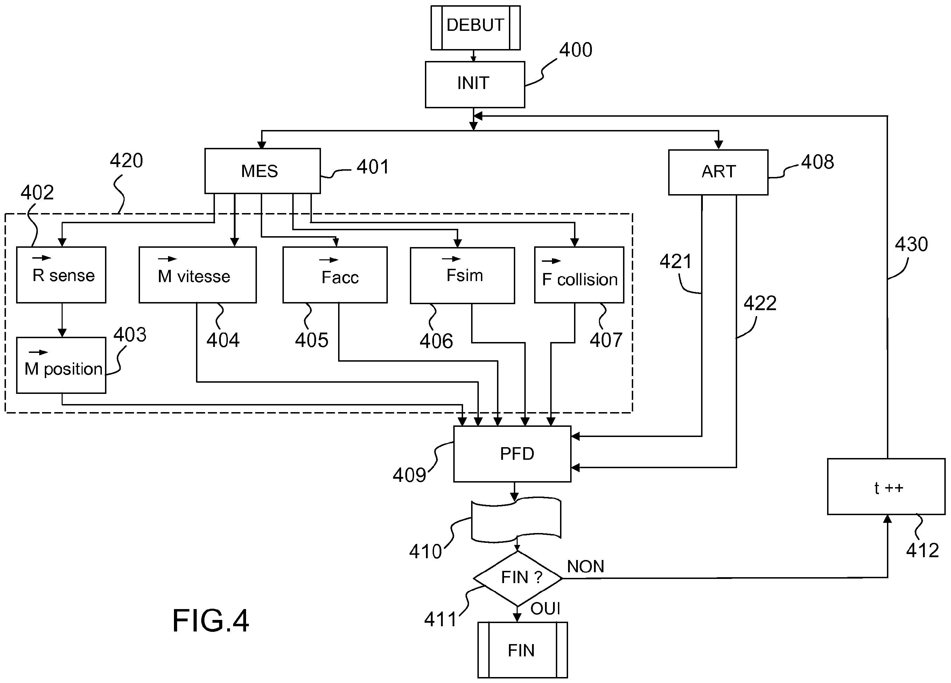

La figure 4 présente un mode de réalisation d'un procédé d'estimation de mouvement d'un objet poly-massique.

L'objectif du procédé est notamment de réaliser des estimations des grandeurs cinématiques pour les segments de l'objet poly-articulé. Ces estimations correspondent pour les différents segments à la position en translation $\overrightarrow{p_{sgmt}}$, la position en rotation $R_{sgmt}$, la vitesse de translation $\overrightarrow{v_{sgmt}}$ et la vitesse de rotation $\overrightarrow{\omega_{sgmt}}$. Ces estimations peuvent être réalisées périodiquement en utilisant un pas de temps par exemple de dix millisecondes.

Le procédé est exécuté de manière itérative.

A la première itération, une étape d'initialisation 400 est mise en oeuvre. Pour cela, des valeurs par défaut sont utilisées. Ces valeurs par défaut sont obtenues par exemple en demandant à un acteur de prendre une pose statique connue préalablement. Sa position en translation par rapport à l'environnement est initialisée à une valeur choisie, par exemple zéro.

Ensuite, une étape d'acquisition des mesures 401 est exécutée. Ces mesures sont le résultat des opérations réalisées par des capteurs embarqués dans les modules de capture positionnées sur l'objet poly-articulé. Dans un mode de réalisation préféré, les modules de capture comprennent deux capteurs. Le premier capteur est un gyromètre et le second un accéléromètre. Dans un mode de réalisation alternatif, les modules de capture comprennent un troisième capteur de type magnétomètre.

Une étape d'estimation de l'orientation des modules de capture 402 est ensuite appliquée. Pour chaque module, l'orientation par rapport à une référence de l'environnement est estimée. Le résultat de cette étape correspond par exemple à une matrice de rotation $R_{sensor}$.

Une matrice de rotation R est une matrice de la forme :

$$R = \begin{bmatrix} R_{xx} & R_{xy} & R_{xz} \\ R_{yx} & R_{yy} & R_{yz} \\ R_{zx} & R_{zy} & R_{zz} \end{bmatrix} \in \mathbb{R}^{3 \times 3}$$

avec :

$$R^{-1} = R^T \in \mathbb{R}^{3 \times 3}$$

det($R$) = 1, det(.) représentant la fonction déterminant.

Pour écrire la matrice de rotation d'un corps rigide j par rapport à un autre corps rigide i servant de référence, la méthodologie suivante peut être utilisée.

Dans un premier temps, un repère orthonormé direct $\psi_i$ est choisit comme repère de référence, dans lequel sera exprimée la configuration du corps rigide j.

Dans un deuxième temps, le repère orthonormé direct $\psi_j$ est attaché au corps rigide, c'est-à-dire que les coordonnées de tous points du corps rigides exprimés dans $\psi_j$ sont constants dans le temps et ce quelque soit le mouvement du corps rigide j.

Dans un troisième temps, la matrice $R$ est définie comme la matrice de taille 3 x 3 des coordonnées des trois vecteurs unitaires des axes du repère $\psi_j$ exprimés dans $\psi_i$. La concaténation se fait selon les colonnes.

L'estimation de l'orientation est réalisé en utilisant les mesures réalisées par les capteurs des différents modules de capture. Ainsi, la mesure de l'accéléromètre et la mesure du vecteur vitesse de rotation $\overrightarrow{\omega_{sensor}}$ du gyromètre peuvent être utilisées. En complément, une mesure du champ magnétique terrestre $\overrightarrow{h_{sensor}}$ en provenance d'un magnétomètre peut également être utilisé. Il est à noter que l'estimation de l'accéléromètre correspond à la quantité suivante :

$$R_{sensor}{}^T (\vec{g} + \overrightarrow{a_{sensor}})$$

dans laquelle :

$\vec{g}$ représente la gravité ;

$\overrightarrow{a_{sensor}}$ représente l'accélération propre du capteur, et donc du module de capture dans lequel il est embarqué.

L'estimation de l'orientation peut être réalisée en utilisant la technique décrite dans la publication de demande de brevet internationale WO2010/007160.

Une étape 403 de détermination d'un moment $\overrightarrow{M_{position}}$ est ensuite appliquée. Pour cela, une raideur est utilisée.

Le moment $\overrightarrow{M_{position}}$ est déterminé à partir de la connaissance du positionnement $R_{sensor}^{sgmt}$ des capteurs sur les segments, de l'orientation du module de capture $R_{sensor}$ estimée à l'étape 402 et de l'orientation $R_{sgmt}$ du segment auquel il est attaché estimée au pas de temps précédent. La raideur est un coefficient utilisé comme paramètre pour convertir un écart d'orientation en un moment. L'écart s'exprime comme étant la différence entre l'orientation estimée à l'instant t à partir des mesures acquises et l'orientation estimée à l'instant d'estimation précédent.

La raideur est donc un paramètre et son choix permet d'affiner les performances d'estimation du procédé. Les raideurs utilisées peuvent être différentes d'un segment à l'autre

A titre d'exemple, si la raideur est introduite à l'aide d'une matrice diagonale $K_r$ de taille 3 x 3, le moment $\overrightarrow{M_{position}}$ peut être déterminé en utilisant l'expression suivante :

$$\widehat{M_{position}} = K_r \left[ \left( R_{sensor}^{sgmt} R_{sgmt} - R_{sensor} \right) - \left( R_{sensor}^{sgmt} R_{sgmt} - R_{sensor} \right)^T \right]$$

dans laquelle :

$X^T$ représente la transposée d'une matrice X ;

^ représente l'opérateur chapeau tel que :

$$\text{pour tout } v = \begin{bmatrix} v_x \\ v_y \\ v_z \end{bmatrix}, \ \hat{v} = \begin{bmatrix} 0 & -v_z & v_y \\ v_z & 0 & -v_x \\ -v_y & v_x & 0 \end{bmatrix}$$

Une étape 404 de détermination d'un moment $\overrightarrow{M_{vitesse}}$ est ensuite appliquée et utilise un amortissement. Ce moment est représentatif d'un contrôle en vitesse sur un segment et est élaboré à partir de la connaissance du positionnement des modules de capture sur les segments $R_{sensor}^{sgmt}$, de la vitesse de rotation du module de capture $\overrightarrow{\omega_{sensor}}$ et de la vitesse de rotation du segment auquel il est attaché $\overrightarrow{\omega_{sgmt}}$ estimée au pas de temps précédent, c'est-à-dire à l'instant d'estimation précédent.

L'amortissement est un coefficient utilisé comme paramètre pour convertir un écart de vitesse de rotation en moment. L'écart s'exprime comme la différence entre la vitesse de rotation estimée à l'instant t et la vitesse de rotation estimée à l'instant d'estimation précédent.

L'amortissement est donc un paramètre et son choix permet d'affiner les performances d'estimation du procédé. Les amortissements utilisés peuvent être différents d'un segment à l'autre.

A titre d'exemple, si $B_r$ est une matrice diagonale de taille 3 x 3 correspondant à des coefficients d'amortissement, le moment $\overrightarrow{M_{vitesse}}$ peut être déterminé en utilisant l'expression suivante :

$$\widehat{M_{vitesse}} = B_r \left( \overrightarrow{\omega_{sgmt}} - R_{sensor}^{sgmt} \overrightarrow{\omega_{sensor}} \right)$$

Une étape 405 a pour objectif de déterminer une force $\overrightarrow{F_{acc}}$ représentative d'un contrôle en accélération. Ce contrôle correspond à deux phénomènes, soit une action de la gravité et un contrôle en accélération propre. Les masses m des segments sur lesquels sont attachés les modules de capture sont utilisées afin d'élaborer une force $\overrightarrow{F_{acc}}$ à partir de la mesure de l'accéléromètre $R_{sensor}^T (\vec{g} + \overrightarrow{a_{sensor}})$ et de la connaissance de l'orientation $R_{sensor}$ du module de capture. A titre d'exemple, la force $\overrightarrow{F_{acc}}$ peut être déterminée pour chaque segment en utilisant l'expression suivante :

$$\overrightarrow{F_{acc}} = m\, R_{sensor}\, R_{sensor}{}^{T} (\vec{g} + \overrightarrow{a_{sensor}})$$

Une étape 406 a pour objectif de déterminer une force $\overrightarrow{F_{sim}}$. Les masses m des segments sont utilisées afin d'élaborer des forces à partir de la position des segments $\overrightarrow{p_{sgmt}}$, $R_{sgmt}$ estimée au pas de temps précédent. Ces forces correspondent à la simulation du poids des segments non-concernés par l'étape 405. Il est alors possible de déterminer pour chaque segment la force $\overrightarrow{F_{sim}}$ simulant l'effet de la pesanteur sur le segment en utilisant l'expression suivante :

$$\overrightarrow{F_{sim}} = m\vec{g}$$

Les étapes 405, 406 permettent de simuler l'effet de la gravité de manière réaliste. Les masses des segments sont prises en compte indépendamment et la gravité est vue comme une accélération.

Une étape 407 a pour objectif de déterminer des forces de collision $\overrightarrow{F_{collision}}$ représentatives des efforts que l'environnent exerce sur l'objet poly-articulé. Ces forces sont déterminées à partir des informations de contacts issues d'une détection de collision entre les géométries des segments et la géométrie de l'environnement et à partir de la modélisation du frottement entre l'objet poly-articulé et l'environnement. Ces informations de contact correspondent par exemple des points 3D et des normales pour chaque point de contact. Ces forces peuvent être calculées à partir d'une méthode par contrainte ou par pénalité en utilisant les estimées de position du pas de temps précédent. La résolution des contacts peut être réalisée à partir de plusieurs modélisations de frottement différentes et conformément aux méthodes classiquement utilisées dans l'état de l'art. A titre d'exemple, une telle méthode est décrite dans l'article de Trinkle, intitulé *Interactive Simulation of Rigid Body Dynamics in Computer Graphics*, State of the Art Reports, 2012.

Il apparaît que plusieurs techniques 403, 404, 405, 406 de détermination d'efforts 420 peuvent être utilisées. L'homme du métier peut choisir au moins une de ces techniques ou une combinaison de plusieurs de ces techniques dans une mise en oeuvre particulière de l'invention. Si les étapes 405 et 406 sont mises en oeuvre ensemble, il faut choisir pour chaque segment l'une ou l'autre de ces techniques.

Pour chaque articulation, une étape 408 pouvant être appliquée en parallèle des étapes de détermination d'efforts 420 précédemment mentionnées a pour objectif de déterminer un effort 421 et/ou une contrainte 422 à partir des paramètres de liaison du modèle physique et des grandeurs cinématiques des segments $R_{sgmt}$ et $\overrightarrow{\omega_{sgmt}}$. Les paramètres de liaison du modèle physique sont des paramètres représentatifs des liaisons mises en oeuvre par cette articulation de manière à traduire par exemple des axes de rotation interdits ou des butées.

Cet effort correspond par exemple à un ensemble composé d'une force $\overrightarrow{F_{articulation}}$ et d'un moment $\overrightarrow{M_{articulation}}$ pour chaque articulation.

Ces efforts 421 et/ou contraintes 422 permettent d'assurer la non-désarticulation de l'objet poly-articulé. Ils peuvent être obtenus selon plusieurs méthodes de l'état de l'art comme par exemple la méthode des pénalités, la méthode des coefficients multiplicateurs de Lagrange, la méthode des impulsions ou par un re-paramétrage du système, comme décrit dans l'article de Trinkle cité précédemment.

Une fois que les efforts/contraintes ont été déterminés par les étapes 402, 403, 404, 405, 406, 407, 408, une étape 409 a pour objectif de résoudre sous les contraintes physiques le système d'équation du principe fondamental de la dynamique et à partir de la masse et des matrices d'inerties des segments. Le résultat de cette étape correspond à une estimation 410 des grandeurs cinématiques $\overrightarrow{p_{sgmt}}$, $R_{sgmt}$, $\overrightarrow{v_{sgmt}}$ et $\overrightarrow{\omega_{sgmt}}$ de chaque segment.

Il est ensuite vérifié 411 si l'estimation de mouvement est terminée. Si c'est le cas, l'exécution se termine. Sinon, le pas de temps est incrémenté 412 et une nouvelle itération 430 est lancée.

Le procédé se distingue des procédés appartenant à l'état de la technique notamment du fait qu'il ne procède pas à une double intégration temporelle des estimées d'accélérations propres pour chaque capteur. Elle est réalisée à l'échelle globale sous contrainte physique. Ainsi, le problème de dérive en translation est contrainte.

L'intégration et la synthèse des efforts sont réalisés au niveau global en résolvant le système d'équation du Principe Fondamental de la Dynamique sous contrainte physique. Toutes les contraintes sont prises en compte en une seule étape finale. Il n'y a pas d'estimation de grandeurs cinématiques intermédiaires comme par exemple une estimation de la position en translation des capteurs.

Avantageusement, le procédé n'utilise pas d'heuristiques de détection d'immobilité ce qui permet de régler le procédé facilement. En effet, ces heuristiques sont souvent difficiles à régler car elles sont dépendantes de l'usage qui est fait du système de capture de mouvements.

La figure 5 donne un exemple de segment du modèle physique en contact avec le sol et fait apparaitre les forces résultant de ce contact.

Deux segments sont représentés. Le premier segment 500 correspond à un pied et le second segment 501 correspond au tibia relié au pied par une articulation. Le segment 500 est en contact avec le sol 502. Une phase de détection de collision permet de déterminer quels sont les zones de contact du segment 500 avec le sol 502. Ensuite, en prenant en compte le poids 503, 504 des segments et la modélisation du frottement, des forces de collision $\overrightarrow{F_{collision}}$ 505, 506, 507 peuvent être déterminées comme expliqué précédemment.

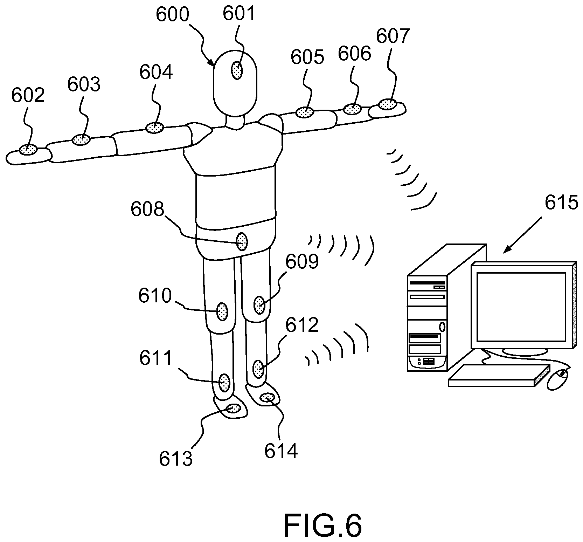

La figure 6 donne un exemple de système d'estimation de mouvement. Dans cet exemple, le mouvement d'un opérateur est capturé de manière à animer son avatar virtuel sur une visualisation 3D en temps réel.

Des modules de capture sont utilisés. Un module de capture dispose par exemple de trois capteurs, soit un accéléromètre trois axes, un gyromètre trois axes et un magnétomètre trois axes. L'opérateur 600 est par exemple équipé de quatorze modules de capture 601, 602, 603, 604, 605, 606, 607, 608, 609, 610, 611, 612, 613, 614 fixés rigidement sur son corps par une combinaison vestimentaire adaptée. Les modules de capture peuvent être positionnés de la manière suivante:

- un module sur chaque paume 602, 607 ;
- un module sur chaque avant bras 603, 606 ;
- un module sur chaque bras 604, 605 ;
- un module sur la tête 601 ;
- un module à la ceinture 608 ;
- un module sur chaque cuisse 609, 610 ;
- un module sur chaque tibia 611, 612 ;
- un module sur chaque pied 613, 614.

Les informations des modules de capture sont collectées par un contrôleur de mouvement, à l'aide par exemple d'un récepteur sans fil connecté en USB à une unité de traitement distante 615 telle qu'un ordinateur. L'unité de traitement 615 met en oeuvre de procédé décrit précédemment en utilisant un modèle physique de l'opérateur.

L'objectif du système est par exemple d'animer un humain virtuel. Le modèle physique est composé d'une pluralité de segments reliés les uns aux autres par des articulations. Ce modèle physique est par exemple agencé de la manière suivante:

- un bassin servant de référence et étant utilisé comme corps racine de la chaine poly-articulée. Le bassin a par exemple six degrés de liberté par rapport à l'environnement ;
- un tronc est composé de trois segments rigides ;
- des clavicules modélisées avec des segments rigides articulés au niveau du sternum ;
- un cou modélisé avec un segment rigide ;
- une tête modélisée par un segment articulé sur le cou ;
- deux pieds décomposés en deux parties, la plante et le talon d'un côté, les métatarses et les orteils de l'autre.

Les doigts ne sont pas modélisés, c'est-à-dire qu'ils sont considérés rigidement fixés aux paumes. La modélisation cinématique comprend par exemple vingt liaisons pour un total de quarante-cinq degrés de liberté internes. Les articulations sont par exemple limitées par des butées articulaires. Les géométries des segments peuvent être choisies comme des segments dilatés, des quadrilatères dilatés ou des géométries complexes issues de conception assistée par ordinateur. Les inerties peuvent être calculées à partir des géométries de chaque segment.

Le modèle physique est ensuite positionné dans un environnement. Cet environnement est par exemple modélisé par un sol plan infini. Les frottements peuvent être modélisés par une loi de Coulomb avec un coefficient d'adhérence de 0.9.

Avantageusement, l'invention peut être appliquée pour des objectifs et besoins très divers comme par exemple l'analyse du mouvement. Dans ce cas, à partir de la connaissance du mouvement, des informations spécifiques sont extraites pour des besoins applicatifs particuliers.

L'invention peut également être utilisée pour la reconstruction complète de mouvement en vue de l'afficher. Le mouvement peut alors être modifié ou amplifié pour obtenir des effets désirés.

Ainsi, l'invention peut être utilisée notamment dans le cadre de la rééducation fonctionnelle, de l'actimétrie, de la formative sportive, des jeux vidéo, du diagnostic thérapeutique, du suivi thérapeutique, de la formation professionnelle au geste technique, de l'ergonomie des produits, de l'ergonomie du poste de travail, de l'animation, du suivi de troupes militaires et/ou du suivi d'acteurs de la sécurité civile.

**Revendications**

1. Procédé d'estimation de mouvement d'un objet massique poly-articulé, composé d'une pluralité de segments reliés par au moins une articulation, ledit procédé comportant les étapes suivantes :

   - acquisition (401) de mesures inertielles issues d'au moins un module de capture fixe par rapport à un segment, ledit module étant composé d'un accéléromètre et d'un gyromètre, lesdites mesures étant exprimées dans un repère de mesure fixe par rapport audit segment ;
   - détermination (420) à partir desdites mesures d'au moins un vecteur effort extérieur à l'objet massique de manière à contrôler un modèle physique de cet objet, ledit modèle représentant l'objet massique ;
   - estimation (409) des grandeurs cinématiques (410) associées aux segments de l'objet en appliquant le principe fondamental de la dynamique avec ledit au moins un vecteur d'effort déterminé à l'étape précédente (420).

2. Procédé selon la revendication 1 dans lequel les étapes du procédé sont appliquées périodiquement avec un pas de temps prédéfini.

3. Procédé selon la revendication 1 dans lequel une étape (408) est appliquée pour au moins une articulation de l'objet de manière à déterminer un effort (421) et/ou une contrainte (422) associé à ladite articulation à partir des paramètres représentatifs des liaisons mises en oeuvre par cette articulation, cet effort (421) et/ou cette contrainte (422) étant utilisée lors de l'application (409) du principe fondamental de la dynamique.

4. Procédé selon l'une des revendications précédentes dans lequel des mesures du champs magnétique terrestres sont acquises (401) du module de capture, ledit module comprenant pour cela un troisième capteur de type magnétomètre.

5. Procédé selon l'une des revendications précédentes dans lequel une étape d'estimation (402) de l'orientation $R_{sensor}$ des modules de capture par rapport à une référence de l'environnement est appliquée pour ledit au moins un module de capture en utilisant les mesures acquises (401).

6. Procédé selon l'une des revendications précédentes dans lequel une étape (403) de détermination d'un moment $\overrightarrow{M_{position}}$ est ensuite appliquée en utilisant le positionnement $R_{sensor}^{sgmt}$ dudit au moins un module de capture sur son segment, de l'orientation $R_{sensor}$ du module de capture et de l'orientation $R_{sgmt}$ du segment auquel il est attaché estimée au pas de temps précédent.

7. Procédé selon la revendication 5 dans lequel le moment $\overrightarrow{M_{position}}$ est déterminé en utilisant l'expression suivante :

$$\widehat{M_{position}} = K_r \left[ \left( R_{sensor}^{sgmt} R_{sgmt} - R_{sensor} \right) - \left( R_{sensor}^{sgmt} R_{sgmt} - R_{sensor} \right)^T \right]$$

dans laquelle :

   $K_r$ est une matrice diagonale de taille $3 \times 3$ correspondant à des coefficients de raideur ;
   $X^T$ représente la transposée d'une matrice X ;
   ^ représente l'opérateur chapeau tel que :

$$\text{pour tout } v = \begin{bmatrix} v_x \\ v_y \\ v_z \end{bmatrix}, \hat{v} = \begin{bmatrix} 0 & -v_z & v_y \\ v_z & 0 & -v_x \\ -v_y & v_x & 0 \end{bmatrix}$$

8. Procédé selon l'une des revendications précédentes dans lequel une étape (404) de détermination d'un moment $\overrightarrow{M_{vitesse}}$ représentatif d'un contrôle en vitesse sur un segment est appliquée après l'acquisition (401) des mesures, ledit moment étant déterminé à partir du positionnement $R_{sensor}^{sgmt}$, de la vitesse de rotation du module de capture $\overrightarrow{\omega_{sensor}}$ et de la vitesse de rotation du segment auquel il est attaché $\overrightarrow{\omega_{sgmt}}$ estimée au pas de temps précédent.

**9.** Procédé selon la revendication 8 dans lequel le moment $\overrightarrow{M_{vitesse}}$ est déterminé en utilisant l'expression suivante :

$$\widehat{M_{vitesse}} = B_r \left( \overrightarrow{\omega_{sgmt}} - R_{sensor}^{sgmt} \, \overrightarrow{\omega_{sensor}} \right)$$

dans laquelle :

$B_r$ est une matrice diagonale de taille $3 \times 3$ correspondant à des coefficients d'amortissement.

**10.** Procédé selon l'une des revendications précédentes dans lequel une étape (405) détermine une force $\overrightarrow{F_{acc}}$ représentative d'un contrôle en accélération incluant la gravité sur le segment en utilisant les masses m des segments sur lesquels sont attachés les modules de capture, des mesures produites par l'accéléromètre et de l'estimation de l'orientation $R_{sensor}$ dudit module.

**11.** Procédé selon la revendication 10 dans lequel la force $\overrightarrow{F_{acc}}$ est déterminée pour chaque segment en utilisant l'expression suivante :

$$\overrightarrow{F_{acc}} = m \, R_{sensor} \, R_{sensor}{}^T (\vec{g} + \overrightarrow{a_{sensor}})$$

dans laquelle :

$\vec{g}$ représente le vecteur gravité ;
$\overrightarrow{a_{sensor}}$ représente l'accélération propre du module de capture.

**12.** Procédé selon l'une des revendications précédentes dans lequel une étape (406) détermine une force $\overrightarrow{F_{sim}}$ simulant l'effet de la pesanteur sur le segment en utilisant les masses m des segments et la position des segments $\overrightarrow{p_{sgmt}}$, $R_{sgmt}$ estimée au pas de temps précédent.

**13.** Procédé selon l'une des revendications précédentes dans lequel une étape (407) a pour objectif de déterminer des forces de collision $\overrightarrow{F_{collision}}$, lesdites forces étant déterminées à partir des informations de contact issues d'une détection de collision entre les géométries des segments et la géométrie de l'environnement et à partir de la modélisation du frottement entre l'objet poly-articulé et l'environnement.

**14.** Système d'estimation de mouvement d'un objet massique poly-articulé, composé d'une pluralité de segments reliés par au moins une articulation et comportant :

- un ensemble d'au moins un module de capture (601, 602, 603, 604, 605, 607, 608, 609, 610, 611, 612, 613, 614) positionné sur au moins un segment de l'objet poly-articulé, ledit module étant fixe par rapport à un segment et étant composé d'au moins un accéléromètre et un gyromètre ;
- une unité de traitement (615) adapté pour acquérir (401) des mesures inertielles issues dudit au moins un module de capture lesdites mesures étant exprimées dans un repère de mesure fixe par rapport audit segment, déterminer (420) à partir desdites mesures au moins un vecteur effort extérieur à l'objet massique de manière à contrôler un modèle physique de cet objet, ledit modèle représentant l'objet massique, estimer (409) des grandeurs cinématiques (410) associées aux segments de l'objet en appliquant le principe fondamental de la dynamique avec le au moins un vecteur d'effort.

**15.** Programme d'ordinateur comportant des instructions pour l'exécution du procédé selon l'une quelconque des revendications 1 à 13, lorsque le programme est exécuté par un processeur.

**Patentansprüche**

**1.** Verfahren zum Schätzen der Bewegung eines mehrgelenkigen Masseobjekts, das sich aus mehreren Segmenten zusammensetzt, die durch mindestens ein Gelenk verbunden sind, und wobei das Verfahren die folgenden Schritte umfasst:

- Erfassen (401) von Trägheitsmesswerten von mindestens einem Erfassungsmodul, das mit Bezug auf ein Segment fest ist, wobei sich das Modul aus einem Beschleunigungsmesser und einem Gyrometer zusammensetzt, wobei die Messwerte in einem mit Bezug auf das Segment festen Messbezugspunkt ausgedrückt werden;
- Bestimmen (420), auf der Basis der Messwerte, mindestens eines Druckvektors außerhalb des Masseobjekts, um ein physikalisches Modell dieses Objekts zu steuern, wobei das Modell das Masseobjekt repräsentiert;
- Schätzen (409) von mit den Segmenten des Objekts assoziierten kinematischen Größen (410) unter Anwendung des Grundprinzips der Dynamik mit dem mindestens einen im vorherigen Schritt (420) bestimmten Druckvektor.

2. Verfahren nach Anspruch 1, wobei die Schritte des Verfahrens periodisch mit einem vordefinierten Zeitschritt angewendet werden.

3. Verfahren nach Anspruch 1, wobei ein Schritt (408) für mindestens ein Gelenk des Objekts angewendet wird, um eine(n) mit dem Gelenk assoziierte(n) Druck (421) und/oder Beanspruchung (422) auf der Basis der Parameter zu bestimmen, die für die durch dieses Gelenk realisierten Verbindungen repräsentativ sind, wobei dieser Druck (421) und/oder diese Beanspruchung (422) bei der Anwendung (409) des Grundprinzips der Dynamik genutzt wird/werden.

4. Verfahren nach einem der vorherigen Ansprüche, wobei die Messwerte des terrestrischen Magnetfeldes von dem Erfassungsmodul gewonnen (401) werden, wobei das Modul dazu einen dritten Sensor des Magnetometertyps umfasst.

5. Verfahren nach einem der vorherigen Ansprüche, wobei ein Schritt des Schätzens (402) der Orientierung $R_{Sensor}$ von Erfassungsmodulen mit Bezug auf eine Referenz der Umgebung für das mindestens eine Erfassungsmodul anhand der gewonnenen (401) Messwerte angewendet wird.

6. Verfahren nach einem der vorherigen Ansprüche, wobei ein Schritt (403) des Bestimmens eines Moments $\overrightarrow{M_{Position}}$ dann anhand der Positionierung $R_{sensor}^{sgmt}$ des mindestens einen Erfassungsmoduls auf seinem Segment, der Orientierung $R_{sensor}$ des Erfassungsmoduls und der Orienterung $R_{sgmt}$ des Segments angewendet wird, an dem es angebracht wird, geschätzt im vorherigen Zeitschritt.

7. Verfahren nach Anspruch 5, wobei das Moment $\overrightarrow{M_{Position}}$ unter Nutzung des folgenden Ausdrucks bestimmt wird:

$$ \widehat{M_{Position}} = K_r \left[ \left( R_{Sensor}^{Sgmt} R_{Sgmt} - R_{Sensor} \right) - \left( R_{Sensor}^{Sgmt} R_{Sgmt} - R_{Sensor} \right)^T \right] $$

wobei:

$K_r$ eine diagonale Matrix der Größe 3 x 3 entsprechend Steifigkeitskoeffizienten ist;
$X^T$ die Transponierte einer Matrix X repräsentiert;
^ den Dach-Operator repräsentiert, so dass:

$$ v = \begin{bmatrix} v_x \\ v_y \\ v_z \end{bmatrix}, \hat{v} = \begin{bmatrix} 0 & -v_z & v_y \\ v_z & 0 & -v_x \\ -v_y & v_x & 0 \end{bmatrix} $$

für jedes .

8. Verfahren nach einem der vorherigen Ansprüche, wobei ein Schritt (404) des Bestimmens eines Moments $\overrightarrow{M_{Geschwindigkeit}}$, das für eine Geschwindigkeitskontrolle auf einem Segment repräsentativ ist, nach dem Gewinnen (401) von Messwerten angewendet wird, wobei das Moment auf der Basis der Positionierung $R_{sensor}^{sgmt}$, der Rotationsgeschwindigkeit des Erfassungsmoduls $\overrightarrow{\omega_{sensor}}$ und der Rotationsgeschwindigkeit des Segments bestimmt wird, an dem es angebracht ist, wobei $\overrightarrow{\omega_{sgmt}}$ im vorherigen Zeitschritt geschätzt wird.

9. Verfahren nach Anspruch 8, wobei das Moment $\overrightarrow{M_{Geschwindigkeit}}$ anhand des folgenden Ausdrucks bestimmt wird:

$$M\,\overrightarrow{\text{Geschwindigkeit}} = B_r \left(\overrightarrow{\omega_{sgmt}} - R^{sgmt}_{sensor}\,\overrightarrow{\omega_{sensor}}\right)$$

wobei:

$B_r$ eine diagonale Matrix der Größe 3 x 3 entsprechend Dämpfungskoeffizienten ist.

**10.** Verfahren nach einem der vorherigen Ansprüche, wobei ein Schritt (405) eine Kraft $\overrightarrow{F_{acc}}$, die eine Beschleunigungskontrolle einschließlich der Schwerkraft auf dem Segment repräsentiert, anhand der Massen m der Segmente, an denen die Erfassungsmodule angebracht sind, der vom Beschleunigungsmesser erzeugten Messwerte und der Schätzung der Orientierung $R_{sensor}$ des Moduls bestimmt.

**11.** Verfahren nach Anspruch 10, wobei die Kraft $\overrightarrow{F_{acc}}$ für jedes Segment anhand des folgenden Ausdrucks bestimmt wird:

$$\overrightarrow{F_{Beschl}} = m\,R_{sensor}\,R_{sensor}{}^{T}\left(\vec{g} + \overrightarrow{a_{sensor}}\right)$$

wobei:

$\vec{g}$ den Schwerkraftvektor repräsentiert;
$\overrightarrow{a_{sensor}}$ die Eigenbeschleunigung des Erfassungsmoduls repräsentiert.

**12.** Verfahren nach einem der vorherigen Ansprüche, wobei ein Schritt (406) eine Kraft $\overrightarrow{F_{sim}}$ bestimmt, die den Effekt der Last auf dem Segment anhand der Massen m der Segmente und der Position der Segmente $\overrightarrow{p_{sgmt}}$, $R_{sgmt}$ simuliert, geschätzt im vorherigen Zeitschritt.

**13.** Verfahren nach einem der vorherigen Ansprüche, wobei ein Schritt (407) zum Ziel hat, Kollisionskräfte $\overrightarrow{F_{Kollision}}$ zu bestimmen, wobei die Kräfte auf der Basis von Kontaktinformationen von einer Kollisionserkennung zwischen den Geometrien der Segmente und der Geometrie der Umgebung und auf der Basis der Modellierung der Reibung zwischen dem mehrgelenkigen Objekt und der Umgebung bestimmt werden.

**14.** System zum Schätzen der Bewegung eines mehrgelenkigen Masseobjekts, das sich aus mehreren Segmenten zusammensetzt, die durch mindestens ein Gelenk verbunden sind, und das Folgendes umfasst:

- eine Baugruppe aus mindestens einem Erfassungsmodul (601, 602, 603, 604, 605, 607, 608, 609, 610, 611, 612, 613, 614), positioniert auf mindestens einem Segment des mehrgelenkigen Objekts, wobei das Modul mit Bezug auf ein Segment fest ist und sich aus mindestens einem Beschleunigungsmesser und einem Gyrometer zusammensetzt;
- eine Verarbeitungseinheit (615), ausgelegt zum Gewinnen (401) von Trägheitsmesswerten von dem mindestens einen Erfassungsmodul, wobei die Messwerte in einem festen Messbezugspunkt mit Bezug auf das Segment ausgedrückt werden, Bestimmen (420), auf der Basis der Messwerte, von mindestens einem Druckvektor außerhalb des Masseobjekts, um ein physikalisches Modell dieses Objekts zu steuern, wobei das Modell das Masseobjekt repräsentiert, und Schätzen (409) der kinematischen Größen (410), die mit den Segmenten des Objekts assoziiert sind, unter Anwendung des Grundprinzips der Dynamik mit dem mindestens einen Druckvektor.

**15.** Computerprogramm, das Befehle zum Ausführen des Verfahrens nach einem der Ansprüche 1 bis 13 umfasst, wenn das Programm von einem Prozessor abgearbeitet wird.

**Claims**

**1.** A method for estimating movement of a poly-articulated mass object composed of a plurality of segments linked by at least one articulation, said method comprising the following steps:

acquisition (401) of inertial measurements obtained from at least one capture module that is fixed relative to a segment, said module being composed of an accelerometer and a gyrometer, said measurements being expressed in a measurement reference frame that is fixed relative to said segment;
determination (420) from said measurements of at least one stress vector external to the mass object so as to control a physical model of this object, said model representing the mass object;
estimation (409) of the kinematic quantities (410) associated with the segments of the object by applying the basic principle of dynamics with said at least one stress vector determined in the preceding step (420).

2.  The method according to Claim 1, wherein the steps of the method are applied periodically with a pre-defined time step.

3.  The method according to Claim 1, wherein a step (408) is applied for at least one articulation of the object so as to determine a stress (421) and/or a strain (422) associated with said articulation from parameters representative of the links implemented by this articulation, this stress (421) and/or this strain (422) being used in the application (409) of the basic principle of dynamics.

4.  The method according to any of the preceding claims, wherein measurements of the earth's magnetic field are acquired (401) from the capture model, said module comprising a third magnetometer-type sensor for this purpose.

5.  The method according to any of the preceding claims, wherein a step of estimation (402) of the orientation $R_{sensor}$ of the capture modules relative to a reference of the environment is applied for said at least one capture module using the acquired measurements (401).

6.  The method according to any of the preceding claims, wherein a step (403) of determination of a moment $\overrightarrow{M_{Position}}$ is then applied using the positioning $R_{sensor}^{sgmt}$ of said at least one capture module on its segment, of the $R_{sensor}$ orientation of the capture module and of the $R_{segment}$ orientation of the segment to which it is attached, estimated in the preceding time step.

7.  The method according to the Claim 5, wherein the moment $\overrightarrow{M_{Position}}$ is determined by using the following expression:

$$M\widehat{_{Position}} = K_r \left[ \left( R_{Sensor}^{Sgmt} R_{Sgmt} - R_{Sensor} \right) - \left( R_{Sensor}^{Sgmt} R_{Sgmt} - R_{Sensor} \right)^T \right]$$

in which:

$K_r$ is a diagonal matrix of size 3x3 corresponding to stiffness coefficients;
$X^T$ represents the transpose of a matrix X;
^ represents the cap operator such that:

$$v = \begin{bmatrix} v_x \\ v_y \\ v_z \end{bmatrix}, \hat{v} = \begin{bmatrix} 0 & -v_z & v_y \\ v_z & 0 & -v_x \\ -v_y & v_x & 0 \end{bmatrix}$$

in each case .

8.  The method according to any of the preceding claims, wherein a step (404) of determination of a moment $\overrightarrow{M_{speed}}$ representative of a speed control on a segment is applied after the acquisition (401) of the measurements, said moment being determined from the positioning $R_{sensor}^{sgmt}$ from the speed of rotation of the capture module $\overrightarrow{\omega_{sensor}}$ and from the speed of rotation of the segment to which it is attached $\overrightarrow{\omega_{sgmt}}$ estimated in the preceding time step.

9.  The method according to Claim 8, wherein the moment $\overrightarrow{M_{speed}}$ is determined by using the following expression:

$$M_{\widehat{speed}} = B_r \left( \overrightarrow{\omega_{sgmt}} - R^{sgmt}_{sensor} \overrightarrow{\omega_{sensor}} \right)$$

in which:

$B_r$ is a diagonal matrix of size 3x3 corresponding to damping coefficients.

10. The method according to any of the preceding claims, wherein a step (405) determines a force $\overrightarrow{F_{acc}}$ representative of an acceleration control including gravity on the segment by using the masses m of the segments to which the capture modules are attached, measurements produced by the accelerometer and estimation of the orientation $R_{sensor}$ of said module.

11. The method according to Claim 10, wherein the force $\overrightarrow{F_{acc}}$ is determined for each segment by using the following expression:

$$\overrightarrow{F_{acc}} = m \, R_{sensor} \, R_{sensor}{}^T (\vec{g} + \overrightarrow{a_{sensor}})$$

in which:

$\vec{g}$ represents the gravity vector;
$\overrightarrow{a_{sensor}}$ represents the acceleration specific to the capture module.

12. The method according to any of the preceding claims, wherein a step (406) determines a force $\overrightarrow{F_{sim}}$ simulating the effect of gravity on the segment by using the masses m of the segments and the position of the segments $\overrightarrow{p_{sgmt}}$, $R_{sgmt}$ estimated in the preceding time step.

13. The method according to any of the preceding claims, wherein the aim of a step (407) is to determine collision forces $\overrightarrow{F_{collision}}$, said forces being determined from contact information obtained from a detection of collision between the geometries of the segments and the geometry of the environment and from friction modelling between the poly-articulated object and the environment.

14. A system for estimating movement of a poly-articulated mass object, composed of a plurality of segments linked by at least one articulation and comprising:

- an assembly of at least one capture module (601, 602, 603, 604, 605, 607, 608, 609, 610, 611, 612, 613, 614) positioned on at least one segment of the poly-articulated object, said module being fixed relative to a segment and being composed of at least one accelerometer and a gyrometer;
- a processing unit (615) adapted to acquire (401) inertial measurements obtained from the at least one capture module, said measurements being expressed in a measurement reference frame that is fixed relative to said segment, to determine (420), from said measurements, at least one stress vector external to the mass object, so as to control a physical model of this object, said model representing the mass object, and to estimate (409) kinematic quantities (410) associated with the segments of the object by applying the basic principle of dynamics with the at least one stress vector.

15. A computer programme comprising instructions for the execution of the method according to any of Claims 1 to 13, when the programme is executed by a processor.

FIG.1

FIG.2

302

303

305

304

301

300

**FIG.3**

501

505

502

504

503

506 507

500

**FIG.5**

FIG.4

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 8165844 B
- WO 2010007160 A